# EUROPÄISCHE PATENTSCHRIFT

(11) **EP 2 436 253 B1**
(45) Veröffentlichungstag und Bekanntmachung des Hinweises auf die Patenterteilung: **13.04.2016**
(21) Anmeldenummer: 11007776.5
(22) Anmeldetag: 23.09.2011
(51) Int. Cl.: A01B 79/00, A01C 17/00, A01C 21/00

(54) **Verfahren zur gleichmässigen Verteilung von Dünger**
Method for equal distribution of fertiliser
Procédé de répartition égale d'engrais

(30) Priorität: 29.09.2010 DE 102010046832
(43) Veröffentlichungstag der Anmeldung: 04.04.2012
(73) Patentinhaber: RAUCH Landmaschinenfabrik GmbH, 76547 Sinzheim (DE)
(72) Erfinder: Rauch, Norbert, 76547 Sinzheim (DE); Stöcklin, Volker, 77975 Ringsheim (DE)
(74) Vertreter: Lichti - Patentanwälte Partnerschaft mbB

(56) Entgegenhaltungen:
- EP-A1- 1 695 606
- EP-A2- 0 158 335
- WO-A1-83/00978
- WO-A1-2009/045114
- DE-A1- 19 835 487

## Beschreibung

Die Erfindung betrifft ein Verfahren zur gleichmäßigen Verteilung von Dünger mittels eines Zweischeibenstreuers in Bereichen eines Feldes, deren landwirtschaftliche Bearbeitung in Kurvenfahrten erfolgt, z.B. in Fahrgassen und/oder an den äußeren Feldgrenzen oder an Baum- oder Pflanzeninseln im Feldinneren.

Aufgrund des wachsenden Bedarfs von Getreide besteht ein Bedarf, auch solche landwirtschaftliche Flächen zu nutzen, die nicht gerade Fahrgassen und/oder nicht gerade verlaufende Feldgrenzen und/oder Wald- und Pflanzeninseln oder Biotope - sogenannte Sölle - mitten auf dem Feld aufweisen. Auch Starkstrommasten und Windkraftanlagen zählen zu diesen Problemfällen. Diese landwirtschaftlichen Flächenbereiche müssen ebenfalls organisch oder mineralisch gedüngt werden.

Zur Verteilung von Mineraldünger dienen heute vorrangig Zweischeibenstreuer, mit denen die vorgenannten Problemfälle bisher keiner Lösung zugeführt werden konnten.

Es sind außerdem Pneumatikstreuer mit quer zur Fahrtrichtung des Traktors verlaufenden Streuleitungen bekannt, in denen der pneumatisch geförderte Dünger über abstandsgleich angeordnete Ausbringorgane auf dem Boden verteilt wird. Bei kurvigen Feldgrenzen oder bei den vorgenannten Problemfällen bewegt sich der Streuer auf einer Kurve. Daher bewegen sich die dem Innenradius zugekehrten Abschnitte der Streuleitung langsamer als die kurvenäußeren Abschnitte mit der Folge, dass bei gleicher Dosiermenge im kurveninneren Bereich eine Überdüngung, im kurvenäußeren Bereich eine Unterdüngung stattfindet. Die DE 10 2004 030 240 A1 sieht vor, dass in Abhängigkeit des vom Traktor gefahrenen Kurvenradius, die die Ausbringorgane im kurveninneren Bereich versorgenden Dosierorgane auf eine kleinere Dosiermenge eingestellt werden als die die kurvenäußeren Ausbringorgane versorgenden Dosierorgane. Im übrigen gibt der Pneumatikstreuer die Möglichkeit, bei nicht fahrgassenkonformem Verlauf der kurvigen Feldgrenze oder der Söllegrenze die Streuleitungen in Teilbereichen abzuschalten. Wegen weiterer Einzelheiten wird auf die vorgenannte Druckschrift verwiesen.

Im Gegensatz zu einem Pneumatikstreuer, bei dem der Dünger flächig und dadurch gleichmäßig ausgebracht wird, wird bei einem angebauten oder gezogenen oder selbstfahrenden Zweischeibenstreuer der Dünger in einem halbkreisförmigen Streufächer in einem größeren Abstand vom Streuer, die der Wurfweite des Streuers entspricht, auf dem Boden verteilt. Dabei befindet sich das Maximum der Düngermenge in der Mitte, während sie nach rechts und links im Halbkreis abfällt. Beim Anschlussfahren werden die Streufächer überlappt und eine gleichmäßige Düngerverteilung erreicht. Dies gilt für die Verteilung in parallelen Fahrgassen.

Ein solches Verfahren mit den Merkmalen des Oberbegriffs des Anspruchs 1 ist aus der WO 2009/045114 bekannt.

Auf landwirtschaftlichen Flächen die nicht gerade verlaufende Fahrgassen oder Fahrtstrecken, also z.B. kurvenfolgende Feldgrenzen, entsprechend parallel geführte weitere Fahrgassen/Fahrwege im Feldinneren und/oder Baum- und Pflanzeninseln mitten im Feld aufweisen, ergibt sich durch eine Kurvenfahrt eine niedrigere Geschwindigkeit des dem Innenradius der Kurve zugekehrten Abschnitts des halbkreisförmigen Streufächers gegenüber dem den Außenradius der Kurve zugekehrten Abschnitt. Die Folge ist im ersteren Falle eine Überdosierung, im zweiten Fall eine Unterdosierung. Außerdem entsteht durch die Wurftiefe des Streufächers, also dem Abstand zwischen den Streuscheiben und dem auftreffenden Dünger auf dem Boden in der Mittelsenkrechten nach hinten, bei der Kurvenbewegung des Streuers ein räumlicher Versatz. Der Streufächer bewegt sich aufgrund der Kurvenfahrt bereits während er noch auf der linearen Strecke auftrifft, also dadurch in unerwünschter Weise herausdriftet.

Aufgabe der Erfindung ist es, mit einem Zweischeibenstreuer in den genannten problematischen Feld- und Feldgrenzbereichen eine möglichst gleichmäßige Düngerverteilung zu erreichen.

Diese Aufgabe wird bei einem Verfahren gemäß dem Anspruch 1 gelöst. Bei der Fahrt auf gerader Strecke ist der Zweischeibenstreuer abhängig von der Düngersorte und der Arbeitsbreite in der Standard- oder Grundeinstellung eingestellt. Gegenüber dieser Standard- oder Grundeinstellung werden bei der Kurvenfahrt entsprechend dem Verlauf der Kurve kurveninnenseitig und kurvenaußenseitig ungleiche Düngermengen und/oder ungleiche Aufgabepunkte und/oder ungleiche Drehzahlen der Streuscheiben eingestellt. Die Einstellbarkeit der vorgenannten drei Parameter einzeln oder insgesamt gibt die Möglichkeit, auf jeden Problemfall bei der Kurvenfahrt zielgerecht zu reagieren.

Gemäß einer bevorzugten Ausführungsform ist vorgesehen, dass eine Überdosierung im kurveninneren Bereich bzw. eine Unterdosierung im kurvenäußeren Bereich durch die Drehbewegung des halbkreisförmigen Streufächers bei der Kurvenfahrt durch eine Reduzierung der Dosiermenge an der kurveninneren Streuscheibe und durch eine Erhöhung der Dosiermenge an der kurvenäußeren Streuscheibe kompensiert wird.

Diese Maßnahme wird man insbesondere dann wählen, wenn es sich um eine kontinuierlich gekrümmte Kurve handelt. Schließt sich an eine Kurvenfahrt eine solche im Gegensinn an, wird die Einstellung der Dosiermenge lediglich von der rechten auf die linke Streuscheibe entsprechend geändert.

In weiterhin vorteilhafter Ausbildung der Erfindung ist vorgesehen, dass bei einer Drehrichtung der Streuscheiben in der Mitte gegen die Fahrtrichtung des Streuers eine Über- bzw. Unterdüngung durch die Drehbewegung des halbkreisförmigen Streufächers zusätzlich an der kurveninneren Streuscheibe mittels einer Verlagerung des Aufgabepunktes gegen die Drehrichtung und/oder nach außen in Richtung des Umfangs der Streuscheibe und an der kurvenäußeren Streuscheibe mittels einer Verlagerung des Aufgabepunktes in Drehrichtung und/oder nach innen in Richtung der Scheibenmitte kompensiert wird.

Diese zusätzliche Maßnahme der Verlagerung des Aufgabepunktes bestimmt den Drehwinkel, unter dem die Düngerpartikel die Streuscheibe verlassen. Je weiter außen der Aufgabepunkt liegt, umso früher verlassen die Düngerpartikel die Streuscheibe, je weiter innen er liegt, umso später verlassen die Düngerpartikel die Streuscheibe. Damit wird die Lage des Streufächers beeinflusst.

In einer weiteren Ausgestaltung der Erfindung ist vorgesehen, dass eine Über- bzw. Unterdosierung durch die Drehbewegung des halbkreisförmigen Streufächers zusätzlich durch eine Reduzierung der Drehzahl der kurveninneren Streuscheibe und/oder durch eine Erhöhung der Drehzahl der kurvenäußeren Streuscheibe kompensiert wird.

Diese in erster Linie zusätzlich vorgesehene Maßnahme lässt sich bei modernen Zweischeibenstreuern mit hydraulischem oder elektrischem Antrieb der Streuscheiben problemlos verwirklichen.

Die Bewegungsrichtung und/oder der Kurvenradius des Zweischeibenstreuers kann mittels eines GPS-Signals ermittelt und die Bewegung des halbkreisförmigen Streufächers errechnet werden.

Vom GPS-Signal können auch Informationen von zu erwartenden Spurverläufen übermittelt werden und in die Rechnung einfließen.

Stattdessen kann die Bewegung des halbkreisförmigen Streufächers auch mittels des Lenkwinkels der Vorderräder des Traktors oder Selbstfahrers errechnet werden. Bei einem gezogenen oder selbstfahrehden Zweischeibenstreuer kann die Bewegung des halbkreisförmigen Streufächers mittels der unterschiedlichen Geschwindigkeit der Räder ermittelt werden.

Als zusätzliche Maßnahme empfiehlt sich, dass bei der Kurvenfahrt an Feldgrenzen an der grenznahen Streuscheibe zusätzlich Grenzstreueinrichtungen eingerückt oder Grenzstreueinstellungen (Drehzahl, Aufgabepunkt, Dosiermenge) vorgenommen werden. Solche Einrichtungen und Einstellungen sind im Stand der Technik bekannt.

Vorteilhafterweise ist vorgesehen, dass Verlagerungen des Aufgabepunktes rechts/links bei Kurvenfahrt sich zu den Grundeinstellungen des Zweischeibenstreuers auf gerader Fahrstrecke in der Ebene und zusätzlich zu eventuellen Einstellungsänderungen beim Hangfahren quer und in Fahrtrichtung abhängig von den jeweils gemessenen Hangwinkeln addieren bzw. verrechnet werden. Im Streuen mit einem Zweischeibenstreuer am Hang wird auf die nicht veröffentlichte Patentanmeldung DE 10 2010 034 215 der Anmelderin verwiesen.

Ferner ist von Vorteil, wenn der räumliche Versatz zwischen dem äußeren Auftreffpunkt des Streufächers auf dem Boden und der Streuscheibe bei der Verlagerung des Streufächers berücksichtigt wird und die Aufgabepunkte rechts/links geregelt werden.

Zusätzlich kann es von Vorteil sein, wenn die Aufgabepunkte derart geregelt werden, dass sich die Mitte des Streufächers immer auf der Mitte der gefahrenen Fahrstrecke befindet.

Schließlich ist vorgesehen, dass alle Maßnahmen - Dosiermengen, Aufgabepunkte, Drehzahlen - von der Grundeinstellung im Feld mit den Maßnahmen der Drehbewegung des Streufächers, des räumlichen Versatzes des Streufächers und dessen Orientierung immer auf die Mitte der Fahrstrecke sowie der Grenzstreueinstellungen miteinander verrechnet werden.

## Patentansprüche

1. Verfahren zur gleichmäßigen Verteilung von Dünger mittels eines Zweischeibenstreuers in Bereichen eines Feldes, deren landwirtschaftliche Bearbeitung in Kurvenfahrten erfolgt, z.B. in Fahrgassen und/oder an den äußeren Feldgrenzen oder an Baum- oder Pflanzeninseln im Feldinneren, **dadurch gekennzeichnet, dass** gegenüber der düngersorten- und arbeitsbreitenabhängigen Einstellung bei der Fahrt auf gerader Fahrstrecke mit Bezug auf den Verlauf der Kurve kurveninnenseitig und kurvenaußenseitig ungleiche Aufgabepunkte eingestellt werden, wobei der räumliche Versatz zwischen dem äußeren Auftreffpunkt des Streufächers auf dem Boden und der Streuscheibe bei der Verlagerung des Streufächers berücksichtigt wird und die Aufgabepunkte rechts/links derart geregelt werden, dass sich die Mitte des Streufächers immer auf der Mitte der gefahrenen Fahrstrecke befindet.

2. Verfahren nach Anspruch 1, **dadurch gekennzeichnet, dass** eine Überdosierung im kurveninneren Bereich bzw. eine Unterdosierung im kurvenäußeren Bereich durch die Drehbewegung des halbkreisförmigen Streufächers bei der Kurvenfahrt durch eine Reduzierung der Dosiermenge an der kurveninneren Streuscheibe und durch eine Erhöhung der Dosiermenge an der kurvenäußeren Streuscheibe kompensiert wird.

3. Verfahren nach Anspruch 1 oder 2, **dadurch gekennzeichnet, dass** bei einer Drehrichtung der Streuscheiben in der Mitte gegen die Fahrtrichtung des Streuers eine Über- bzw. Unterdüngung durch die Drehbewegung des halbkreisförmigen Streufächers zusätzlich an der kurveninneren Streuscheibe mittels einer Verlagerung des Aufgabepunktes gegen die Drehrichtung und/oder nach außen in Richtung des Umfangs der Streuscheibe und an der kurvenäußeren Streuscheibe mittels einer Verlagerung des Aufgabepunktes in Drehrichtung und/oder nach innen in Richtung der Scheibenmitte kompensiert wird.

4. Verfahren nach einem der Ansprüche 1 bis 3, **dadurch gekennzeichnet, dass** eine Über- bzw. Unterdosierung durch die Drehbewegung des halbkreisförmigen Streufächers zusätzlich durch eine Reduzierung der Drehzahl der kurveninneren Streuscheibe und/oder durch eine Erhöhung der Drehzahl der kurvenäußeren Streuscheibe kompensiert wird.

5. Verfahren nach einem der Ansprüche 1 bis 4, **dadurch gekennzeichnet, dass** mittels eines GPS-Signals die Bewegungsrichtung und/oder der Kurvenradius des Zweischeibenstreuers ermittelt und die Bewegung des halbkreisförmigen Streufächers errechnet wird.

6. Verfahren nach dem Anspruch 5, **dadurch gekennzeichnet, dass** vom GPS-Signal Informationen von zu erwartenden Spurverläufen übermittelt werden und in die Berechnung einfließen.

7. Verfahren nach einem der Ansprüche 1 bis 4, **dadurch gekennzeichnet, dass** mittels des Lenkwinkels der Vorderräder des Traktors oder Selbstfahrers die Bewegung des halbkreisförmigen Streufächers errechnet wird.

8. Verfahren nach einem der Ansprüche 1 bis 4, **dadurch gekennzeichnet, dass** bei einem gezogenen oder selbstfahrenden Zweischeibenstreuer die Bewegung des halbkreisförmigen Streufächers mittels der unterschiedlichen Geschwindigkeit der Räder ermittelt wird.

9. Verfahren nach einem der Ansprüche 1 bis 7, **dadurch gekennzeichnet, dass** bei der Kurvenfahrt an Feldgrenzen an der grenznahen Streuscheibe zusätzlich Grenzstreueinrichtungen eingerückt oder Grenzstreueinstellungen (Drehzahl, Aufgabepunkt, Dosiermenge) vorgenommen werden.

10. Verfahren nach einem der Ansprüche 1 bis 8, **dadurch gekennzeichnet, dass** Verlagerungen des Aufgabepunktes rechts/links bei Kurvenfahrt sich zu den Grundeinstellungen des Zweischeibenstreuers auf gerader Fahrstrecke in der Ebene und zusätzlich zu eventuellen Einstellungsänderungen beim Hangfahren quer und in Fahrtrichtung abhängig von den jeweils gemessenen Hangwinkeln addieren bzw. verrechnet werden.

11. Verfahren nach einem der Ansprüche 1 bis 10, **dadurch gekennzeichnet, dass** alle Maßnahmen - Dosiermengen, Aufgabepunkte, Drehzahlen - von der Grundeinstellung im Feld mit den Maßnahmen der Drehbewegung des Streufächers, des räumlichen Versatzes des Streufächers und dessen Orientierung immer auf die Mitte der Fahrstrecke sowie der Grenzstreueinstellungen miteinander verrechnet werden.

## Claims

1. Method for the even distribution of fertilizer by means of a two-disc spreader in field regions, the agricultural cultivation of which takes place in cornering travel, for example, in tracks and/or at the outer field boundaries or at tree or plant islands in the interior of the field, **characterized in that**, in comparison to the fertilizer-type and working-width-dependent setting during travel over a rectilinear driving section, non-uniform application points are set with regard to the profile of the curve on the curve interior and curve exterior, wherein the spatial offset between the outer striking point of the spreading fan on the ground and the spreading disc is taken into consideration during the shifting of the spreading fan, and the application points on the right/left are controlled in such a manner that the centre of the spreading fan is always located on the centre of the driving section travelled.

2. Method according to Claim 1, **characterized in that** over metering in the curve-inner region or under metering in the curve-outer region because of the rotational movement of the semicircular spreading fan during the cornering travel is compensated for by a reduction in the metering quantity at the curve-inner spreading disc and by an increase in the metering quantity at the curve-outer spreading disc.

3. Method according to Claim 1 or 2, **characterized in that**, in the event of a direction of rotation of the spreading discs in the centre counter to the direction of travel of the spreader, over fertilizing or under fertilizing because of the rotational movement of the semicircular spreading fan is additionally compensated for at the curve-inner spreading disc by means of shifting the application point counter to the direction of rotation and/or outwards in the direction of the circumference of the spreading disc and at the curve-outer spreading disc by means of shifting the application point in the direction of rotation and/or inwards in the direction of the disc centre.

4. Method according to one of Claims 1 to 3, **characterized in that** over metering or under metering because of the rotational movement of the semicircular spreading fan is additionally compensated for by a reduction in the rotational speed of the curve-inner spreading disc and/or by an increase in the rotational speed of the curve-outer spreading disc.

5. Method according to one of Claims 1 to 4, **characterized in that** the direction of movement and/or the curve radius of the two-disc spreader is determined by means of a GPS signal, and the movement of the semicircular spreading fan is calculated.

6. Method according to Claim 5, **characterized in that** information regarding lane courses to be expected is transmitted by the GPS signal and included in the calculation.

7. Method according to one of Claims 1 to 4, **characterized in that** the movement of the semicircular spreading fan is calculated by means of the steering angle of the front wheels of the tractor or self-propelling vehicle.

8. Method according to one of Claims 1 to 4, **characterized in that**, in the case of a towed or self-propelling two-disc spreader, the movement of the semicircular spreading fan is determined by means of the different speed of the wheels.

9. Method according to one of Claims 1 to 7, **characterized in that**, in the event of the cornering travel at field boundaries, at the spreading disc in the vicinity of the boundary, boundary spreading devices are additionally engaged or boundary spreading settings (rotational speed, application point, metering quantity) implemented.

10. Method according to one of Claims 1 to 8, **characterized in that** shiftings of the application point on the right/left during cornering travel are added to or calculated with the basic settings of the two-disc spreader on a rectilinear driving section on the level and additionally are added to or calculated with possible setting changes during travel on a slope transversely to and in the direction of travel depending on the respectively measured slope angles.

11. Method according to one of Claims 1 to 10, **characterized in that** all of the measures - metering quantities, application points, rotational speeds - of the basic setting in the field are calculated together with the measures of the rotational movement of the spreading fan, of the spatial offset of the spreading fan and the orientation thereof always with respect to the centre of the driving section, and with the boundary spreading settings.

## Revendications

1. Procédé de répartition uniforme d'engrais à l'aide d'un épandeur à deux disques dans les zones d'un champ, pour lequel le traitement agricole s'effectue selon des conduites en virage, par exemple dans des couloirs de conduite et/ou au niveau des limites de champ extérieures ou au niveau d'îlots d'arbres ou de plantations à l'intérieur du champ, **caractérisé en ce que** par rapport au réglage dépendant des types d'engrais et des largeurs de travail en situation de conduite sur un tronçon de conduite droit, des points d'envoi différents sont réglés par rapport à la trajectoire du virage à l'intérieur du virage et à l'extérieur du virage, le décalage dans l'espace entre le point de croisement extérieur de l'éventail d'épandage sur le fond et le disque d'épandage en situation de déplacement de l'éventail d'épandage est pris en compte et les points d'envoi sont réglés de telle sorte à droite/à gauche que le centre de l'éventail d'épandage se trouve toujours au centre du tronçon de conduite parcouru.

2. Procédé selon la revendication 1, **caractérisé en ce qu'**un surdosage dans la région située à l'intérieur du virage et/ou un sous-dosage dans la région située à l'extérieur du virage est compensé par le mouvement de rotation de l'éventail d'épandage en forme de demi-cercle dans la conduite en virage, en réduisant la quantité de dosage du disque d'épandage situé à l'intérieur du virage et en augmentant la quantité de dosage du disque d'épandage situé à l'extérieur du virage.

3. Procédé selon la revendication 1 ou 2, **caractérisé en ce qu'**en cas de direction de rotation des disques d'épandage au centre à l'encontre de la direction de conduite de l'épandeur, un sur-traitement et/ou sous-traitement à l'engrais est compensé par le mouvement de rotation de l'éventail d'épandage en forme de demi-cercle en sus au niveau du disque d'épandage situé à l'intérieur du virage par déplacement du point d'envoi à l'encontre de la direction de rotation et/ou vers l'extérieur en direction de la périphérie du disque d'épandage et au niveau du disque d'épandage situé à l'extérieur du virage au moyen d'un déplacement du point d'envoi dans la direction de rotation et/ou vers l'intérieur en direction du centre du disque.

4. Procédé selon l'une quelconque des revendications 1 à 3, **caractérisé en ce qu'**un sur et/ou sous-dosage est en outre compensé par le mouvement de rotation de l'éventail d'épandage en forme de demi-cercle, par une réduction de la vitesse de rotation du disque d'épandage situé à l'intérieur du virage et/ou par une augmentation de la vitesse de rotation du disque d'épandage situé à l'extérieur du virage.

5. Procédé selon l'une quelconque des revendications 1 à 4, **caractérisé en ce que** la direction de déplacement et/ou le rayon de virage de l'épandeur à deux disques est calculé à l'aide d'un signal GPS et que le mouvement de l'éventail d'épandage est calculé en forme de demi-cercle.

6. Procédé selon la revendication 5, **caractérisé en ce que** les informations relatives aux trajectoires de voie attendues sont transmises par le signal GPS et intégrées dans le calcul.

7. Procédé selon l'une quelconque des revendications 1 à 4, **caractérisé en ce que** le mouvement de l'éventail d'épandage en forme de demi-cercle est calculé à l'aide de l'angle de braquage des roues avant du tracteur ou du véhicule auto-propulsé.

8. Procédé selon l'une quelconque des revendications 1 à 4, **caractérisé en ce qu'**en cas d'épandeur à deux disques tracté ou auto-propulsé, le mouvement de l'éventail d'épandage en forme de demi-cercle est calculé à l'aide de la différence de vitesses des roues.

9. Procédé selon l'une quelconque des revendications 1 à 7, **caractérisé en ce qu'**en cas de conduite en virage au niveau des limites de champ, des dispositifs d'épandage en limite sont en outre enclenchés au niveau du disque d'épandage proche de la limite ou que des réglages d'épandage en limite (vitesse de rotation, point d'envoi, quantité de dosage) sont effectués.

10. Procédé selon l'une quelconque des revendications 1 à 8, **caractérisé en ce que** les déplacements du point d'envoi à droite/à gauche en situation de conduite en virage s'ajoutent aux réglages de base de l'épandeur à deux disques sur le tronçon de conduite parcouru dans le plan et sont en outre calculés et/ou ajoutés aux éventuels changements de réglage lors de la conduite en pente, transversalement et dans la direction de conduite, en fonction des angles de pente respectivement mesurés.

11. Procédé selon l'une quelconque des revendications 1 à 10, **caractérisé en ce que** toutes les mesures - quantités de dosage, points d'envoi, vitesses de rotation - sont calculées conjointement par le biais des réglages d'épandage en limite ainsi que du réglage de base dans le champ, avec les mesures du mouvement de rotation de l'éventail d'épandage, du décalage dans l'espace de l'éventail d'épandage et de son orientation, toujours au centre du tronçon de conduite.
